# EUROPEAN PATENT APPLICATION

(11) **EP 1 369 394 A1**
(43) Date of publication of application: **10.12.2003**
(21) Application number: 03090158.1
(22) Date of filing: 26.05.2003
(51) Int. Cl.: C03B 37/014, C03B 19/14, C03B 37/012

(54) **Lower-loss base material for optical fibres and manufacturing method thereof**

(30) Priority: 31.05.2002 JP 2002159952
(71) Applicant: SHIN-ETSU CHEMICAL CO., LTD., Chiyoda-ku Tokyo (JP)
(72) Inventor: Inoue, Dai, Shin-Etsu Chemical Co., Ltd, Annaka-shi, Gumma-ken (JP); Oyamada, Hiroshi, Shin-Etsu Chemical Co., Ltd, Annaka-shi, Gumma-ken (JP); Otosaka, Tetsuya, Shin-Etsu Chemical Co., Ltd, Annaka-shi, Gumma-ken (JP); Hirasawa, Hideo, Shin-Etsu Chemical Co., Ltd, Annaka-shi, Gumma-ken (JP)
(74) Representative: Pfenning, Meinig & Partner GbR

(57) **Abstract**

Amethod for manufacturing a base material of optical fibres having a desired ratio of core to clad, including forming a porous base material upon depositing glass particles, producing a core member upon dehydrating and vitrifying the porous base material, adding a clad member onto the core member, is characterized in that the method includes, a step of dehydrating the porous base material in an atmosphere of gas including helium and chlorine within an electric furnace; a step of vitrifying the porous base material in an atmosphere of inert gas including helium; and a step of providing a purging step of heating the porous base material in an atmosphere of inert gas mainly including helium between the dehydrating step and the vitrifying step.

## Description

### BACKGROUND OF THE INVENTION

### Field of the Invention:

The present invention relates to a method for manufacturing a base material of optical fibres by means of a Vapor-phase-Axial-Deposition (VAD) More particularly, the present invention relates to a method for manufacturing a lower-loss basematerial of optical fibres, the light absorption originating from the existence of water is extremely lower than the conventional base material.

### Related Art:

Conventionally, a VAD method is well known as a method for manufacturing a base material of optical fibres. According to this method, glass particles produced in vapour phase are deposited on a leading edge of a starting member attached to a shaft moving upward while rotating in order to manufacturing optical fibres composed of a core layer and a clad layer.

This base material, a porous base material, is dehydrated upon heating in an atmosphere of dehydration gas such as chlorine. Hereupon, the base material is vitrified upon heating in an atmosphere of inert gas such as helium. Then, a core member for optical fibres including a part of clad layer is obtained.

Furthermore, a clad member is deposited on an outer surface of the core member by jacketing with a silica tube or using any vapour synthesising methods, dehydrating, and vitrifying to obtain a glass base material for optical fibres with a desired ration of core to clad.

In optical fibres obtained upon drawing a glass base material according to the conventional manufacturing method, a projected large peak of light loss exists at the wavelength about 1383 nm. This peak takes place due to the existence of the hydroxy (OH) group contained in optical fibres. Even if the content of OH group in the optical fibres is only 1 ppb, a light loss of 0.065 dB/km occurs. Also, it is known that the peak increases with time due to dispersion of hydrogen.

Conventionally, the region of such wavelength encompassing the peak is not relevant in a case which the absorption peak is below 1dB/km. However, recent technologies of a coarse wavelength division multiplexing (CWDM) method and Raman amplification come up in applications so that the above-mention region of wavelength becomes important. In this regard, the lager the peak becomes, the worse the transmission quality of light signal gets.

### SUMMARY OF THE INVENTION

The present invention provides solutions to such drawback. Accordingly, an object of the invention is to provide a base material for optical fibres lowering light loss due to existence of hydroxy group and its manufacturing method.

Amethod for manufacturing a base material of optical fibres having a desired ratio of core to clad, including forming a porous base material upon deposing glass particles, producing a core member upon dehydrating and vitrifying the porous base material, adding a clad member onto the core member, is characterized in that the method includes, a step of dehydrating the porous base material in an atmosphere of gas including helium and chlorine within a furnace, a step of vitrifying the porous base material in an atmosphere of inert gas including helium, and a step of providing a purging seep of heating the porous base material in an atmosphere of inert gas mainly including helium between the dehydrating step and the vitrifying step.

In the present invention, the content of moisture of the helium gas used in said dehydrating step, the vitrifying step, and purging step, is reduced to less than 10 ppb. In the mean time, the purging step is performed between 800°C and 1200°C.

After elongating the dehydrated and vitrified core member in a desired diameter by heating with an oxyhydrogen burner using for a glass lathe, the clad member is added upon removing a surface layer including moisture by etching, or after elongating the dehydrated and vitrified core member therein a desired diameter by heating in an electric furnace, the clad member is added upon removing a surface layer including impurities by etching.

### BRIEF DESCRIPTION OF THE DRAWINGS

Fig. 1 shows an example of the configuration of a porous-glass-base-material sintering apparatus.
Fig. 2 is a graph showing loss characteristics on optical fibres obtained according to an embodiment of the present invention.
Fig. 3 a graph showing loss characteristics on optical fibres obtained according to the conventional method.

### DETAILED DESCRIPTION OF THE INVENTION

The invention will now be described based on the preferred embodiments, which do not intend to limit the scope of the present invention, but exemplify the invention. All of the features and the combinations thereof described in the embodiments are not necessarily essential to the invention.

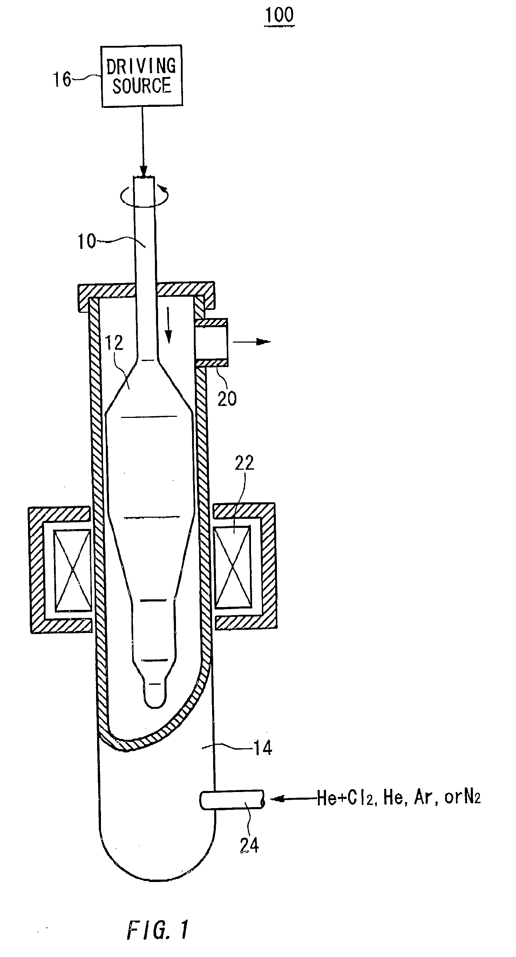

Fig. 1 shows an example of the configuration of a porous-glass-base-material sintering apparatus 100. The sintering apparatus 100 has a container 14, a heater 22, a gas introduction pipe 24, and a drive source 16. The container 14 is made from silica glass. A heater 22 is arranged around the container 14 to heat the container 14.

The gas introduction pipe 24 is connected to the bottom part of the container 14, and the mixed gas, which contains inert gas such as helium (He) gas and dehydration-reaction-gas such as chlorine (Cl₂) gas, is introduced into the container 14 through the gas introduction pipe 24.

An exhaust pipe 20 is connected to the top part of the container 14, and the mixed gas which travels through the container 14 from the bottom part of the container 14 is discharged from the exhaust pipe 20. The drive source 16 is provided in the upper part of the sintering apparatus 100. The drive source 16 is connected to a core rod 10.

The porous-glass-base-material 12 is formed around the circumference of the core rod 10 by such as VAD method before the dehydration process. The drive source 16 inserts the porous-glass-base-material 12 into the container 14 by descending the core rod 10 into the container 14 . The container 14 is filled with the atmosphere of the mixed gas, which flowed from the gas introduction pipe 24, and the circumference of the container 14 is heated by the heater 22. Therefore, the porous-glass-base-material 12 inserted into the container 14 is heated under a mixed gas atmosphere to be dehydrated and sintered.

At the replacement process that will be mentioned later, the gas remaining inside pores of the porous-glass-base-material 12 is replaced by a first inert gas, such as helium. The porous-glass-base-material 12 has a plurality of pores. In the replacement process, the first inert gas is introduced into the container 14 through the gas introduction pipe 24 to fill the container 14 with the first inert gas.

Furthermore, at the vitrification process that will be mentioned later, the porous-glass-base-material 12 is heated and vitrified in the second inert gas atmosphere by introducing the second inert gas, such as helium, argon, or nitrogen, in the container 14 through the gas introduction pipe 24.

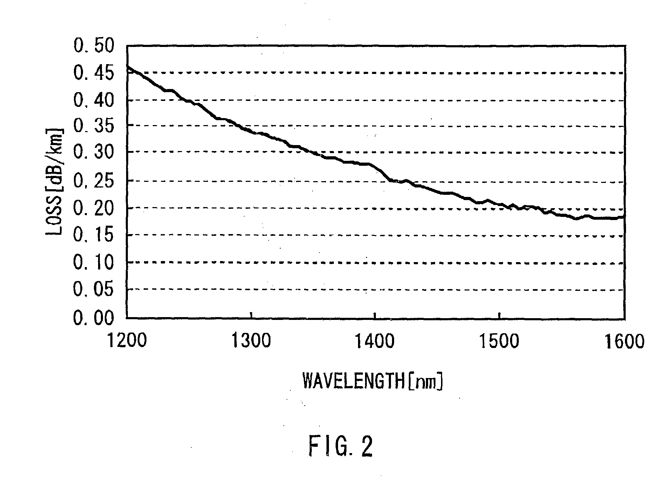

The type of the sintering apparatus 100 is not limited to the type shown in Fig. 2. For example, the sintering apparatus 100 may fix the position of the porous-glass-base-material 12 inside the container 14 and move the heater 22 relative to the porous-glass-base-material 12.

The present invention provides a way of manufacturing a core member by incorporating a purging step of heating the porous base material in an atmosphere of inert gas mainly including helium between the conventional dehydrating step and the conventional vitrifying step in order to decrease moisture and furthermore adding a clad member thereon the core member..As a result, in the OH peak region of about 1383 nm in the wavelength, the light loss is substantially reduced.

In the present invention, gas used in a dehydrating step, a vitrifying step, and a purging step, is helium as an example. Helium includes moisture of below 10 ppm. However, helium is refined with a refiner down to below 10 ppb so that use of such helium lowers the light loss This means that the purging step perform a substitution of residual moisture with gas whish does not substantially includes any moisture after the dehydrating step removes some moistures from a silica with help of chlorine. Similarly, reducing moisture from chlorine in the other steps with a refiner further improves the quality.

In order to efficiently achieve the purging step, an operation temperature is set between 800 °C and 1200 °C. Below 800 °C, a diffusion speed of gas including moisture is so slow that the substitution of the gas with no-moisture gas cannot be accomplished within substantial amount of time. Additionally, a vigorous change in temperature may cause damages such as crack on a tube of furnace. On the other hand, above 1200 °C, a porous base material starts shrinking. In this case, hydrogen components resided in glass cannot be appropriately purged so that the substitution of gas is not efficiently performed.

After elongating the dehydrated and vitrified core member in a desired diameter, a clad member having necessary thickness is added thereon the core member.

As a means for elongation of the core member, a glass lathe or a furnace may be used. Upon considering the light distribution presumed in a drawn optical fibres, if the light distribution extends to outside of the core member, moisture existing at boundary between the core member and the clad member to be added becomes considerable.

When a glass lathe is used for elongation, moisture disperses on a surface of the core member due to flame from an oxyhydrogen burner used for the lathe. In order to reduce such moisture dispersion, it is preferable to remove a surface layer of the elongated core member by etching with fluoric acid or plasma.

When an electric furnace is used for elongation, moisture rarely disperses on a surface of the core member. However, some materials arise from the furnace may reside on the surface of the core member and this may degrade the quality of absorption. In this case, it is also preferable to remove a surface layer of the elongated core member by etching.

The core member represents merely a core or constitution of core with a part of clad. A ratio of core to clad in the core member is determined with tolerance based on the content of moisture in a clad member to be added. For example, in order to lower the absorption due to the hydroxy group in a clad member to be added below 0.01 dB/km, in a case which the content of moisture in the clad member is about 200ppm, a ration of an amount of light power extending outside of the clad member over the total amount of light power needs to be suppressed below 7×10⁻⁷. In another example, in a case which the content of moisture in the clad member is reduced to about 2ppm, the ratio of powers may be 7x10⁻⁷. Based on such presumed light power, a desired ratio of core to clad in the core member is determined. Inthemeantime, the presumed light distribution substantially depends on a distribution shape relating to refractive index of a core.

### [Example 1]

A porous base member is formed upon depositing glass particles according to a VAD method. Hereupon, this porous base member is suspended perpendicularly within an electric furnace. In this configuration, to form a core member for optical fibres, the porous base member is dehydrated at 1100 °C in an atmosphere of chlorine and helium, purged at 1100 °C in an atmosphere of helium 100%, then vitrified at 1500 °C in an atmosphere of helium 100%.

The furnace used herein includes a tube made of quarts. A porous or glass base material is operably located within the tube so as to move upward or downward while the base material maintains to be kept away from air. A heater disposed in the furnace heats a part of the tube. Under such configuration, the base member is processed passing through the heated part of the tube for performing the above-mentioned steps or processes.

The tube has an open-end with a lid having an opening for selectively opening or closing. A shaft connected to the base material is disposed through the opening so that the base material can move upward or downward in accordance with the movement of the shaft. Also, the tube has a supply port disposed at the bottom part for supplying atmospheric gas into and has an exhausting port disposed on the lid for exhausting the gas therethrough.

In the meantime, for each step or process,in order to prevent moisture from returning to the dehydrated base material, the content of moisture of each gas supplied to the tube is reduced below 10ppb. The purging step is performed at temperature of between 800 °C and 1200 °C.

Upon drawing a core member manufactured under such conditions, loss characteristics on the drawn core member are measured by propagating a plurality of modes The result shows that an absorption peak around the wavelength of 1383nm becomes considerably small. Thus, the improvement is observed.

The obtained core member has 0.20 in a ratio of core to clad. This configuration is not sufficient enough as a single-mode optical fibres. Thus, according to a suitable method, a clad is further added to the obtained core member so as to be a sufficient glass base material for optical fibres.

When the clad is further added, the core member needs to be elongated in a predetermined diameter. For example, a glass lathe using an oxyhydro burner is used for elongation. In this regard, after removing a surface on which moisture disperses by etching with fluoric acid solution, the clad is added to the core member. Furthermore, the core member with the added clad is dehydrated and vitrified in an atmosphere of helium and chlorine.

Fig. 2 is a graph showing loss characteristics obtained on the core member with the added clad as set forth above. This result shows loss characteristics as good as those of the previously mentioned drawn core member.

On the other hand, in a case which a furnace is used for elongation, after impurities existing on the core member with the added clad are removed by etching with fluoric acid solution, the clad is added to the core member. Furthermore, the core member with the added clad is dehydrated and vitrified in an atmosphere of helium and chlorine. Similarly, the result of loss characteristics shows improvements.

### [Comparative example 1]

Herein, according to the conventional method, a glass base material is manufactured. The differences between the conventional method and the present invention are explained as follows;

At first, the conventional method does not have a purging step between a dehydrating step and a vitrifying step. At second, in the conventional method, the content of moisture of gas supplied into a tube of furnace is only guaranteed down to 1ppm. At third, for adding a clad, the conventional method does not provide etching a surface of a core member elongated with oxyhydro flame.

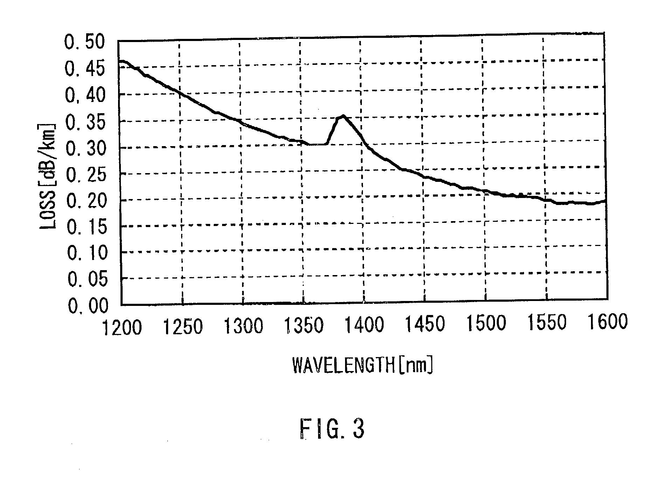

Fig. 3 is a graph showing loss characteristics on optical fibres obtained upon drawing a glass base material manufactured according to the conventional method. This result shows a large peak of light loss at the wavelength of 1383nm.

The present invention provides a purging step between a dehydrating step and a vitrifying step. Along with this feature, loss due to hydroxy group is suppressed. Accordingly, a lower-loss base material for optical fibres is obtained.

## Claims

1. A method for manufacturing a base material of optical fibres having a desired ratio of core to clad, comprising:
forming a porous base material upon depositing glass particles;
producing a core member upon dehydrating and vitrifying the porous base material;
adding a clad member onto the core member;
dehydrating the porous base material in an atmosphere of gas including helium and chlorine within an electric furnace;
vitrifying the porous base material in an atmosphere of inert gas including helium; and
providing a purging step of heating the porous base material in an atmosphere of inert gas mainly including helium between said dehydrating step and said vitrifying step.

2. A method according to claim 1, wherein the content of moisture of the helium gas used in said dehydrating step, said vitrifying step, and said purging step is reduced to less than 10 ppb.

3. A method according to claim 1, wherein said purging step is performed between 800°C and 1200°C.

4. A method according to claim 1, further comprising adding said clad member upon removing a surface layer including moisture by etching, after elongating the dehydrated and vitrified core member in a desired diameter by heating with an oxyhydrogen burner using a glass lathe.

5. A method according to claim 1, further comprising adding said clad member upon removing a surface layer including impurities by etching, after elongating the dehydrated and vitrified core member in a desired diameter by heating in said furnace.

6. A base material of an optical fiber formed froma base material which is manufactured by using a method according to one of claims 1, 2, 3, 4, and 5.
